# EUROPEAN PATENT APPLICATION

(11) **EP 2 482 217 A1**
(43) Date of publication of application: **01.08.2012**
(21) Application number: 11152694.3
(22) Date of filing: 31.01.2011
(51) Int. Cl.: G06F 21/00, G06F 3/048, G07C 9/00

(54) **Electronic device and method of controlling same**

(71) Applicant: Research In Motion Limited, Waterloo, ON N2L 3W8 (CA)
(72) Inventor: Ramrattan Colin, Shiva, Waterloo Ontario N2L 3W8 (CA); Theimer Wolfgang, Michael, 44799, Bochum (DE)
(74) Representative: MERH-IP Matias Erny Reichl Hoffmann

(57) **Abstract**

A method includes receiving a first input comprising at least two touches that overlap in time on a touch-sensitive display, storing data associated with the input including data associated with the at least two touches to control access to functions at the portable electronic device, detecting a second input on the touch-sensitive display to provide access to the functions, and providing access to the functions based on a comparison of data associated with the second input to the stored data.

## Description

The present disclosure relates to electronic devices including, but not limited to, portable electronic devices having touch-sensitive displays.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive display may be modified depending on the functions and operations being performed.

Improvements in electronic devices with touch-sensitive displays are desirable.

### SUMMARY

According to one aspect, a method includes receiving a first input comprising at least two touches that overlap in time on a touch-sensitive display, storing data associated with the input including data associated with the at least two touches to control access to functions at the portable electronic device, detecting a second input on the touch-sensitive display to provide access to the functions, and providing access to the functions based on a comparison of data associated with the second input to the stored data.

According to another aspect, an electronic device includes a housing, a touch-sensitive display coupled to the housing, a memory, and a processor coupled to the memory and the touch-sensitive display to receive, when in a recording mode, a first input comprising at least two touches that overlap in time on the touch-sensitive display, store data associated with the input including data associated with the at least two touches for access control at the portable electronic device, detect a second input on the touch-sensitive display to provide access to functions of the portable electronic device, and provide access to the functions based on a comparison of data associated with the second input to the stored data.

### BRIEF DESCRIPTION OF THE DRAWINGS

Embodiments of the present disclosure will now be described, by way of example only, with reference to the attached Figures, wherein:

FIG. 1 is a block diagram of a portable electronic device in accordance with an example embodiment;

FIG. 2 is a front view of an example of a portable electronic device illustrating an example of a password detected on a touch-sensitive dipslay;

FIG. 3 is a flowchart illustrating an example of a method of controlling the portable electronic device in accordance with the disclosure;

FIG. 4 illustrates an example of a password detected on the portable electronic device of FIG. 2;

FIG. 5 is a flowchart illustrating an example of a method of controlling the portable electronic device in accordance with the disclosure; and

FIG. 6 illustrates another example of a password detected on a portable electronic device.

### DETAILED DESCRIPTION

The following describes an electronic device and a method that includes receiving a first input comprising at least two touches that overlap in time on a touch-sensitive display, storing data associated with the input including data associated with the at least two touches to control access to functions at the portable electronic device, detecting a second input on the touch-sensitive display to provide access to the functions, and providing access to the functions based on a comparison of data associated with the second input to the stored data.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, such as a portable electronic device. Examples of portable electronic devices include wireless communication devices such as pagers, mobile or cellular phones, smartphones, wireless organizers, PDAs, notebook computers, netbook computers, tablet computers, and so forth. The portable electronic device may also be a portable electronic device without wireless communication capabilities. Examples of a portable electronic device include a handheld electronic game device, a digital photograph album, a digital camera,a notebook computer, a netbook computer, a tablet computer, or other device.

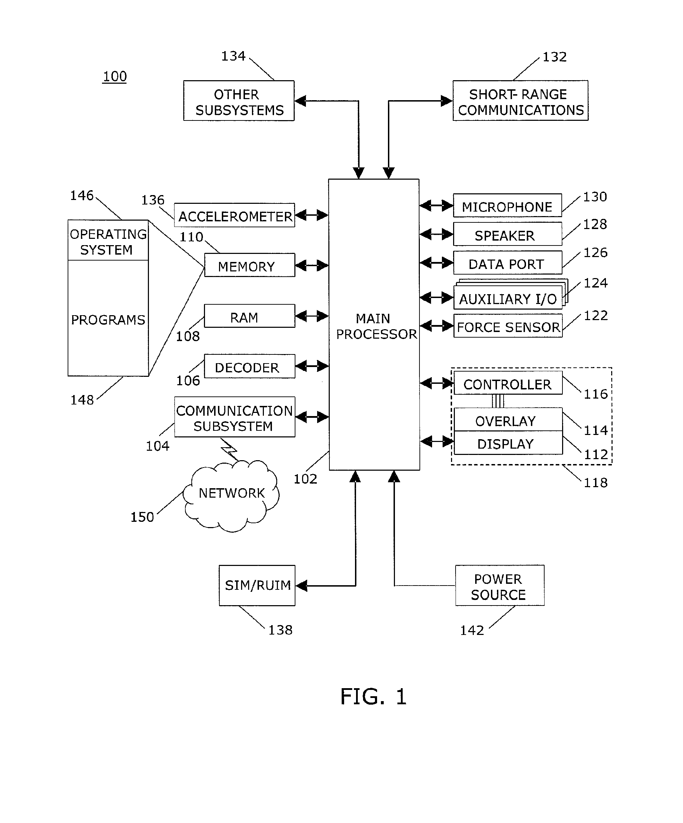

A block diagram of an example of a portable electronic device 100 is shown in FIG. 1. The portable electronic device 100 includes multiple components, such as a processor 102 that controls the overall operation of the portable electronic device 100. The portable electronic device 100 presently described optionally includes a communication subsystem 104 and a short-range communications 132 module to perform various communication functions, including data and voice communications. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an orientation sensor such as an accelerometer 136 to detect direction of gravitational forces or gravity-induced reaction forces so as to determine, for example, the orientation of the portable electronic device 100.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104, for example. For voice communications, the overall operation of the portable electronic device 100 may be similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. In the presently described example embodiment, the touch-sensitive display 118 is a capacitive touch-sensitive display which includes a capacitive touch-sensitive overlay 114. The overlay 114 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO). Alternatively, the capacitive touch sensor layers may be integrated into the display 112 rather than overlaying the display 112.

The display 112 of the touch-sensitive display 118 may include a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area.

One or more touches, also known as touch contacts or touch events, may be detected by the touch-sensitive display 118. The processor 102 may determine attributes of the touch, including a location of a touch, timing of touch, and a value related to the applied pressure or force. Touch location data may include an area of contact or a single point of contact, such as a point at or near a center of the area of contact, known as the centroid. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. The location of the touch moves as the detected object moves during a touch. The controller 116 and/or the processor 102 may detect a touch by any suitable contact member on the touch-sensitive display 118. Similarly, multiple simultaneous touches, are detected. One or more taps may also be detected. Taps are types of touches, the duration of which is less than a threshold value.

One or more gestures are also detected by the touch-sensitive display 118. A gesture is a particular type of touch on a touch-sensitive display 118 that begins at an origin point and continues to an end point. A gesture may be identified by attributes of the gesture, including the origin point, the end point, the distance travelled, the duration, the velocity, and the direction, for example. A gesture may be long or short in distance and/or duration. Points of the gesture may be utilized to determine a direction or directions of the gesture.

An example of a gesture is a swipe (also known as a flick). A swipe has a single direction and typically includes movement of the detected object from the origin point to an end point while maintaining continuous contact with the touch-sensitive overlay 114. The touch-sensitive overlay 114 may evaluate swipes with respect to the origin point at which contact is initially made with the touch-sensitive overlay 114 and the end point at which contact with the touch-sensitive overlay 114 ends. Alternatively, multiple locations or points of contact over the duration of the gesture may be utilized to determine a direction. Swipes may be, for example, generally horizontal, generally vertical, generally diagonal, or any other suitable angle on the touch-sensitive display 116. Swipes may be of various lengths, may be initiated in various places on the touch-sensitive overlay 114, and need not span the full dimension of the touch-sensitive overlay 114. In addition, breaking contact of a swipe can be gradual in that contact with the touch-sensitive overlay 114 is gradually reduced while the swipe is still underway.

Other examples of gestures include gestures that follow a path in more than one direction. For example, gestures may follow a curved path rather than a generally linear path. Gestures may also include multi-touch gestures in which multiple touches/gestures are simultaneous or overlap in time. Thus, for example, two fingers may be utilized and multi-touch gestures may be distinguished from single touch gestures and may provide additional or further functionality.

Each gesture may be represented by a sequence of points along the path of the gesture, timing information, and pressure or force information. For example, each gesture may be represented by x and y coordinates of the points along the path of the gesture along with relative time stamps and pressure or force values for each point.

In some example embodiments, an optional force sensor 122 or force sensors is/are disposed in any suitable location, for example, between the touch-sensitive display 118 and a back of the portable electronic device 100 to detect a force imparted by a touch on the touch-sensitive display 118. The force sensor 122 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

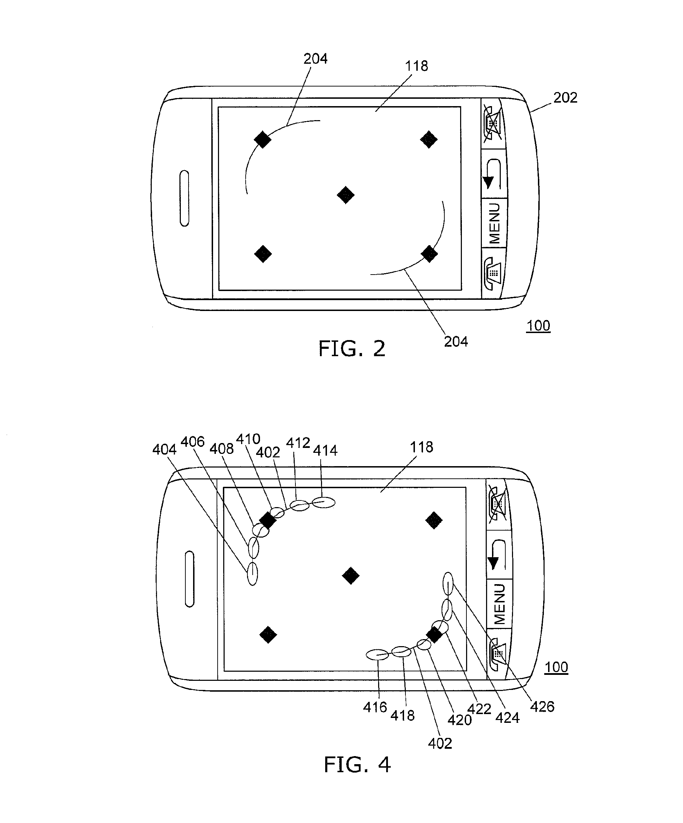

A front view of an example of the portable electronic device 100 is shown in FIG. 2. The portable electronic device 100 includes a housing 202 that encloses components such as shown in FIG. 1. The housing 202 may include a back, sidewalls, and a front, and the housing 202 and the touch-sensitive display 118 house internal components of the portable electronic device 100 including at least some of the components shown and described with reference to FIG. 1.

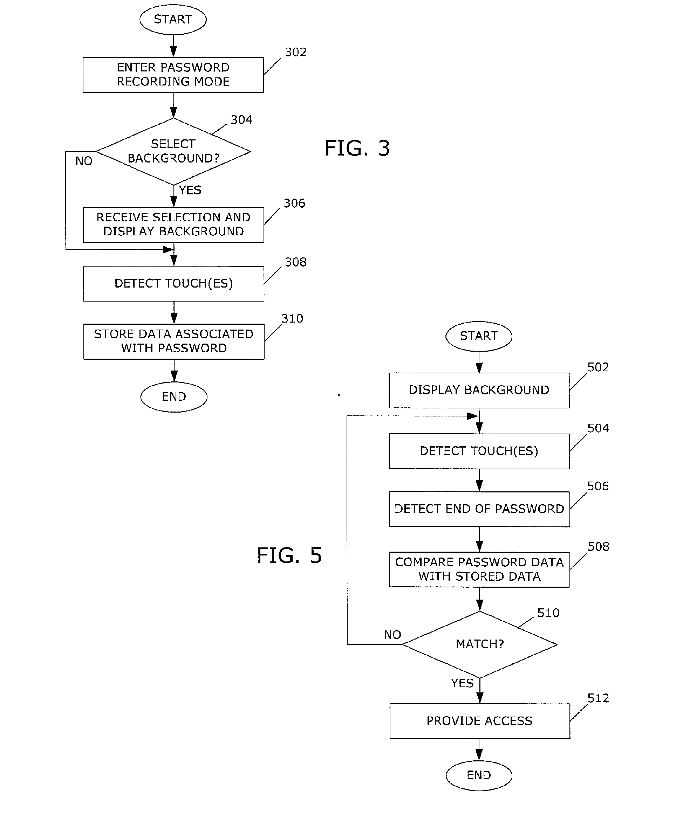

A flowchart illustrating a method of controlling an electronic device, such as the portable electronic device 100, is shown in FIG. 3. The method may be carried out by computer-readable code executed, for example, by the processor 102. Coding of software for carrying out such a method is within the scope of a person of ordinary skill in the art given the present description. The method may contain additional or fewer processes than shown and/or described, and may be performed in a different order.

The method may be carried out to control access to, for example, functions, applications, or data stored at the portable electronic device 100. For example, the method may be carried out to provide a lock to control access to the portable electronic device 100, known as a password or passcode. The term password as utilized herein includes touches, which may include gestures. A password recording mode is entered at 302. The password recording mode may be any process in which a password that includes a touch or touches is entered. The password recording mode may be entered, for example, upon selection of an option to set a password, upon selection of an option to lock the portable electronic device 100 when a password is not set, when the portable electronic device 100 is started and a password is not set, prior to, during or after synchronizing with another device or server, or any other suitable time.

A background may optionally be selected by, for example, selecting an option to enter a background at 304. The background may be a design, pattern, figure, picture, or any other suitable background. The background may be selected at 306 from, for example, a group of designs or patterns, a group of figures, pictures, or any other suitable group. The background may be stored on the portable electronic device 100 and selected at 306 or may be stored remotely, retrieved, selected, and displayed at 306. Alternatively, a background may be created. A remotely stored background may be stored in memory such as memory 110 of the portable electronic device 100 upon selection.

Touches, which may include gestures that are utilized for the password, are detected at 308. The password may include multiple touches including consecutive touches and touches that overlap at least partially in time. At 308, a password, which includes touches, may be repeated one or more times and the data related to the touches is set and stored at 310 as the password.

The password may include a gesture or gestures and may be represented by a sequence of points along the path of the gesture and timing information. For example, each gesture may be represented by x and y coordinates of the points along the path of the gesture along with relative time stamps for each point. When the same gesture is entered, for example, twice, the two entered gestures typically include points along a path that differ, at least a small amount, in location and in time. A gesture or gestures may be repeated several times to facilitate collection of suitable data for the password at 308. In one example, each gesture may be modeled by straight lines that link points that are sampled along the path of the gesture. Points along the modeled gesture may be resampled to facilitate comparison of gestures by, for example, determining points along the modeled gesture that are equidistant in time or by determining points along the path of the modeled gesture that are equidistant in distance along the path. The points that are determined may therefore be points that lie between the points sampled during entry of the gesture.

As indicated above, the gestures may be repeated several times and each gesture is resampled to include an identical number of points along the gesture. Average coordinate positions of the resampled points are determined and deviations from the resampled points may be determined utilizing the points of the repeated gestures. The deviations may be deviations in both the x and y axes for the resampled points. The deviations may be illustrated by ellipses around each of the resampled points. The ellipses are determined based on the deviation in each of the x and y axes for each of the resampled points. Average relative times of each of the coordinate positions is determined and deviation in time may also be determined.

The password may also include touches, which may be taps, the location of which does not change over time. Data associated with the touches may include an average location, timing information, including time relative to other touches and time during which the touch is maintained, and data related to pressure of the touch. The data related to pressure of the touch may include data from force sensors 122 or may include data related to the area of contact of the touch, for example.

One example of a gesture including two touches that overlap in time is illustrated in FIG. 2. The password recording mode is entered at 302. For the purpose of the present example, selection of an option to enter a background is received at 304 and a background selected at 306. The background in the present example is a pattern including diamond-shaped guides. Other backgrounds may be utilized. The gesture 204, which is a multi-touch gesture is detected and repeated multiple times at 308. The average location of the resampled points along the repeated gesture is determined as illustrated by the vertices along the path of the modeled gesture 402 illustrated in FIG. 4. The deviations are determined as illustrated by the ellipses 404, 406, 408, 410, 412, 414, 416, 418, 420, 422, 424, 426, which are centered on the vertices. The data, including the average location of the resampled points along with the deviations, is stored at 310.

A flowchart illustrating a method of controlling an electronic device, such as the portable electronic device 100, is shown in FIG. 5. The method may be carried out by computer-readable code executed, for example, by the processor 102. Coding of software for carrying out such a method is within the scope of a person of ordinary skill in the art given the present description. The method may contain additional or fewer processes than shown and/or described, and may be performed in a different order.

The method may be carried out to access, for example, functions, applications, or data stored at the portable electronic device 100. For example, the method may be carried out to unlock and provide access to functions of the portable electronic device 100. The portable electronic device 100 may prompt a user to enter the password, for example, when a user attempts to access functions of the portable electronic device 100 and the background may be displayed at 502. The background selection in FIG. 3 and the display of the background at 502 is optional. The background may provide a guide for the user during entry of the gesture.

Touches, which may include taps as well as gestures that are utilized for the password, are detected at 504. The touches may include multiple touches including consecutive touches and touches that overlap at least partially in time.

The end of the password is detected at 506. The end of the password may be detected in any suitable manner. For example, the end of the password may be detected upon detection of a force applied to the touch-sensitive display 118 that meets a threshold value, detection of a touch on the touch-sensitive display 118 that meets a threshold size, detection of a touch or depression of a virtual or physical button on the portable electronic device 100, after a threshold period of time elapses, when the number of entered password strokes matches that of the stored data or in any other suitable manner.

The received password is compared to the saved password at 508 and when the passwords match at 510, access is provided at 512 to the functions, applications, or data. For example, the portable electronic device 100 may be unlocked for use. When the received password does not match the saved password at 508, the process may continue at 504, for example, prompting the user to reenter the password. Optionally, the user may be prompted to reenter the password a limited number of times such that failure to enter a matching password within the limited number of times may cause the portable electronic device 100 to timeout or to delete data stored on the portable electronic device, for example.

Continuing with the example of the gesture described with reference to FIG. 2 and FIG. 4, a user may be prompted to enter the password to unlock the portable electronic device 100. The background is displayed at 502 and a gesture, similar to the gesture 204, is detected on the touch-sensitive display 118. The end of the gesture is detected at 506, for example, after a threshold period of time elapses following entry of the gesture. The received password is compared to the stored password data at 508. For the purpose of the present example, the received password is modeled by straight lines that link points that are sampled along the path of the gesture. Points along the modeled gesture are resampled in a similar manner to that described above with reference to FIG. 3, to facilitate comparison of the received gesture with the stored data associated with the password. When the resampled points match the average locations of the resampled points stored at the portable electronic device 100, within an acceptable range or error limit, a match is determined at 510 and the portable electronic device 100 is unlocked. The resampled points may match the average locations when, for example, the sum of the deviations between the resampled points and the average location is less than a threshold value. Alternatively, the resampled points may match the average locations when the resampled points fall within the deviations illustrated by the ellipses 404, 406, 408, 410, 412, 414, 416,418,420,422,424,426.

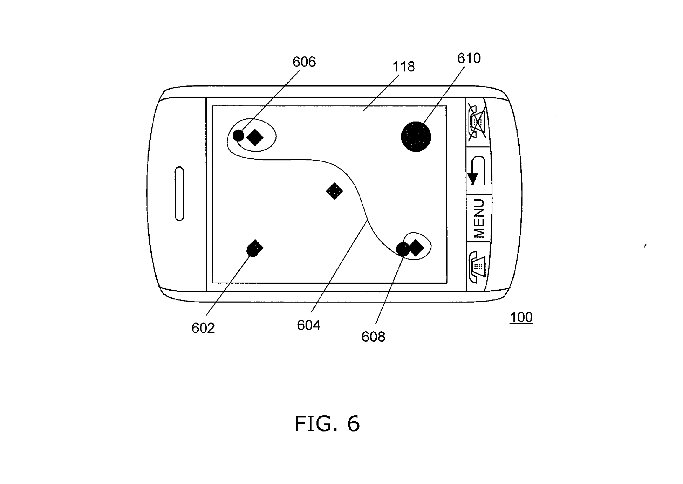

FIG. 6 illustrates an example of touches detected on the touch-sensitive display 118. The password recording mode is entered at 302 to provide a password for unlocking the portable electronic device 100. For the purpose of this example, an option to enter a background is selected at 304 and the background pattern is selected at 306. Touches are detected at 308. In the present example, the touches include a first touch 602, the location of which does not move while the touch is maintained on the touch-sensitive display. While the touch 602 is maintained, a touch, in the form of a gesture 604 is detected on the touch-sensitive display 118, beginning at the origin point 606 and finishing at the end point 608. The touches 602 and 604 therefore overlap at least partially in time. The touch 604 ends, followed by the touch 602. A third touch 610 is detected after both the touches 604, 602 end. For the purpose of the present example, the force of the touch 610 is greater than the force of the touch 602. A value related to the force of the touch may be determined, for example, based on the detected area of the touch. Thus, the detected area of the touch 610 is greater than the detected area of the touch 602. Entry of the password may be repeated multiple times to collect suitable data. Data associated with the touches 602, 604, 610, including average locations, average times, and average values associated with pressure of the touches, is stored at 310.

To unlock the portable electronic device 100, the background is displayed at 502. Touches are detected at 504. In the present example, the touches are similar to the touches 602, 604, 610. When the touch 610 ends, the password ends 506 and data relating to the received password is compared to the data stored at 310. For the purpose of this example, the average locations, average times, and average values associated with pressure of the touches detected at 504 are compared to the data stored at 310. When a match is determined within suitable error limits or ranges at 510, the portable electronic device 100 is unlocked at 512.

The touches are described as examples only and many other passwords may be utilized.

Device security may be provided utilizing touches, including touches, which may be gestures, that overlap at least partially in time. Further, such touches may be entered quickly and efficiently, providing fast access, and reducing password entry time while maintaining security. The use of multi-touch gestures, for example, increases the number of input possibilities that may be entered quickly, therefore increasing the number of possible password entries that may be entered without increasing input time.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
receiving a first input comprising at least two touches that overlap in time on a touch-sensitive display;
storing data associated with the input including data associated with the at least two touches to control access to functions at the portable electronic device;
detecting a second input on the touch-sensitive display to provide access to the functions; and
providing access to the functions based on a comparison of data associated with the second input to the stored data.

2. The method according to claim 1, wherein the first input comprises a multiple touch gesture.

3. The method according to claim 1, wherein the first input comprises a plurality of gestures, at least one of the gestures comprising the multiple touch gesture.

4. The method according to any of claims 1 to 3, wherein at least one of the touches does not move along the touch-sensitive display.

5. The method according to any of claims 1 to 4, wherein the data associated with the input comprises pressure of at least one of the touches.

6. The method according to any of claims 1 to 5, wherein the data associated with the input comprises sampled locations and time associated with the sampled locations.

7. The method according to any of claims 1 to 6, wherein the first input comprises an additional touch that does not overlap in time.

8. The method according to claim 7, wherein the additional touch does not move along the touch-sensitive display.

9. The method according to claim 6, wherein the data associated with the input comprises pressure of the additional touch.

10. The method according to any of claims 1 to 9, comprising displaying a reference image on the touch-sensitive display prior to receiving the first input.

11. The method according to claim 10, wherein the reference image comprises a picture.

12. The method according to claim 10, comprising displaying the reference image on the touch-sensitive display prior to receiving the second input.

13. The method according to claim 10, wherein the reference image is displayed in response to receipt of selection of the reference image prior to receiving the first input.

14. The method according to any of claims 1 to 13, wherein providing access to the functions comprises unlocking access to the functions when the data associated with the second input matches the stored data within a threshold range.

15. The method according to any of claims 1 to 14, wherein receiving the first input comprises receiving the first input when in a recording mode of a portable electronic device.

16. A computer-readable medium having computer-readable code executable by at least one processor of the portable electronic device to perform the method of any of claims 1 to 15.

17. An electronic device comprising:
a housing;
a touch-sensitive display coupled to the housing;
a memory and a processor coupled to the memory and the touch-sensitive display to receive, when in a recording mode, a first input comprising at least two touches that overlap in time on the touch-sensitive display, store data associated with the input including data associated with the at least two touches for access control at the portable electronic device, detect a second input on the touch-sensitive display to provide access to functions of the portable electronic device, and provide access to the functions based on a comparison of data associated with the second input to the stored data.

## Amended claims

### Amended claims in accordance with Rule 137(2) EPC.

**1.** A method comprising:
receiving a first input comprising at least two touches that overlap in time on a touch-sensitive display (118);
storing data associated with the input including data comprising a number of points associated with the at least two touches to control access to functions at the portable electronic device (100);
detecting a second input on the touch-sensitive display (118) to provide access to the functions;
resampling data associated with the second input to include data associated with the same number of points as the stored data; and
providing access to the functions based on a comparison of said resampled data associated with the second input to the stored data for each of the said number of points.

**2.** The method according to claim 1, wherein the first input comprises a multiple touch gesture.

**3.** The method according to claim 1, wherein the first input comprises a plurality of gestures, at least one of the gestures comprising the multiple touch gesture.

**4.** The method according to claim 1, wherein at least one of the touches does not move along the touch-sensitive display (118).

**5.** The method according to claim 1, wherein the data associated with the input comprises pressure of at least one of the touches.

**6.** The method according to claim 1, wherein the data associated with the input comprises sampled locations and time associated with the sampled locations.

**7.** The method according to claim 1, wherein the first input comprises an additional touch that does not overlap in time.

**8.** The method according to claim 7, wherein the additional touch does not move along the touch-sensitive display (118).

**9.** The method according to claim 6, wherein the data associated with the Input comprises pressure of the additional touch.

**10.** The method according to claim 1, comprising displaying a reference image on the touch-sensitive display (118) prior to receiving the first input.

**11.** The method according to claim 10, wherein the reference image comprises a picture.

**12.** The method according to claim 10, comprising displaying the reference image on the touch-sensitive display (118) prior to receiving the second input.

**13.** The method according to claim 10, wherein the reference image is displayed in response to receipt of selection of the reference image prior to receiving the first input.

**14.** The method according to claim 1, wherein providing access to the functions comprises unlocking access to the functions when the data associated with the second input matches the stored data within a threshold range.

**15.** The method according to claim 1, wherein receiving the first input comprises receiving the first input when in a recording mode of a portable electronic device (100).

**16.** A computer-readable medium having computer-readable code executable by at least one processor (102) of the portable electronic device (100) to perform the method of any of claims 1 to 15.

**17.** An electronic device (100) comprising:
a housing (202);
a touch-sensitive display (118)coupled to the housing (202);
a memory (110) and a processor (102) coupled to the memory (110) and the touch-sensitive display (118) to receive, a first input comprising at least two touches that overlap in time on the touch-sensitive display (118), store data associated with the input including data comprising a number of points associated with the at least two touches for access control at the portable electronic device (100), detect a second input on the touch-sensitive display (118) to provide access to functions of the portable electronic device (100), resample data associated with the second input to include data associated with the same number of points as the stored data, and provide access to the functions based on a comparison of said resampled data associated with the second input to the stored data for each of the said number of points.
